(19) Europäisches Patentamt / European Patent Office / Office européen des brevets

(11) **EP 3 878 798 B1**

(12) **EUROPEAN PATENT SPECIFICATION**

(45) Date of publication and mention
of the grant of the patent:
**06.03.2024   Bulletin 2024/10**

(21) Application number: **18939750.8**

(22) Date of filing: **05.11.2018**

(51) International Patent Classification (IPC):
**B66F 9/24** *(2006.01)*        **B62D 6/00** *(2006.01)*

(52) Cooperative Patent Classification (CPC):
**B62D 6/002; B66F 9/0755; B66F 9/07568;
B66F 9/24;** B62D 6/003

(86) International application number:
**PCT/JP2018/040965**

(87) International publication number:
**WO 2020/095341 (14.05.2020 Gazette 2020/20)**

(54) **INDUSTRIAL VEHICLE**

INDUSTRIEFAHRZEUG

VÉHICULE INDUSTRIEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.09.2021   Bulletin 2021/37**

(73) Proprietor: **SHIMADZU CORPORATION
Kyoto-shi, Kyoto 604-8511 (JP)**

(72) Inventors:
• **GOSHIMA Daisuke
  Kyoto-shi, Kyoto 604-8511 (JP)**
• **YAMAMURA Shinya
  Kyoto-shi, Kyoto 604-8511 (JP)**

(74) Representative: **Müller-Boré & Partner
Patentanwälte PartG mbB
Friedenheimer Brücke 21
80639 München (DE)**

(56) References cited:
WO-A1-2009/130718      JP-A- H 072 126
JP-A- H06 107 221      JP-A- H11 321 266
JP-A- 2005 200 212      JP-A- 2005 200 212
JP-A- 2012 096 742      JP-A- 2012 096 742
US-A1- 2006 065 470      US-A1- 2018 229 989

EP 3 878 798 B1

**Description**

TECHNICAL FIELD

The present invention relates to an industrial vehicle such as a forklift, including: a main body including steered wheels; a steering handle for operating the steered wheels; and a lifting and lowering member configured to lift and lower a load, and particularly relates to an industrial vehicle including a steer-by-wire type steering system.

BACKGROUND ART

In such a forklift as an industrial vehicle, a full-hydraulic type power steering device equipped with an Orbitrol (registered trademark of Eaton Corp.) configured to supply hydraulic oil in an amount corresponding to an operation amount of a steering handle to a steering cylinder to steer steered wheels is used. On the other hand, in recent years, as a steering system of a forklift, a steer-by-wire type electric hydraulic power steering has been adopted in which the operation on the steering handle is detected as an electric signal and input to a control device, and a voltage to be supplied to a DC motor for providing power to a hydraulic pressure supply source is controlled by the control device.

When such a forklift turns with an excessively small radius due to abrupt steering operation at a high traveling speed, there is a risk that the vehicle may turn over. For this reason, various techniques for preventing such overturning have been proposed.

Patent Literature 1 discloses a speed regulating device for a forklift, configured to calculate a gravity center and an overturning limit angle of a forklift on the basis of a position and a weight of a load, to calculate an overturning limit speed at which an angle formed by a force in an overturning direction of the forklift applied to the gravity center and a predetermined direction is the overturning limit angle, on the basis of the gravity center, a steering amount, and the weight of the load, and to regulate the vehicle speed of the forklift on the basis of the overturning limit speed.

Patent Literature 2 discloses a forklift configured to predict a traveling state at a predetermined time of future, to apply a brake in a case where a vehicle speed at that time exceeds an allowable vehicle speed at which an overturning possibly occurs, and to release the brake when the forklift is brought back to a state where the forklift does not turn over.

Patent Literature 3 discloses an overturning prevention device for a forklift, including a lifting height detector configured to detect a lifting height of a fork, a shift amount detector configured to detect a side-shift amount of the fork, and a controller configured to control a traveling speed of a vehicle by arithmetically controlling an operation of a traveling motor based on lifting height data from the lifting height detector and shift amount data from the shift amount detector.

Patent Literature 4 discloses a safety device for a forklift, which includes an electric power steering device configured to supply assist torque to a steering handle by an electric motor. The safety device controls the power steering electric motor so as to reduce the assist torque when the vehicle speed is high and the angular speed of the steered wheel is large, thereby making the steering handle operation heavier to prevent high-speed steering handle operation.

US 2018/229989 A1 describes a forklift capable of recognizing an approximate weight of an object to be conveyed supported by a fork without adding special parts. A control unit includes a storage unit which stores load/time information indicating a relationship between a delay time required for an angle of rear wheels to reach an angle corresponding to an angle of the steering wheel and a weight of the object to be conveyed supported by the fork at that time, a delay time detection unit which detects the delay time required for a steering angle of the rear wheels to reach the angle corresponding to the angle of the steering wheel, and a weight identifying unit which identifies the weight of the object to be conveyed supported by the fork on the basis of the delay time detected by the delay time detection unit and the load/time information stored in the storage unit.

JP 2005 200212 A describes a turning-over prevention device for a forklift truck that is formed so that a limit speed can be calculated by obtaining a load height from the displacement of a piston detected by a displacement sensor, a load weight from a pressure detected by a pressure sensor, limit speeds when the load weight is and a rating (maximum), and linearly interpolating the limit speeds. In this case, the value of the minimum radius of rotation stored in a controller is used as the radius of rotation of the forklift truck, and when an actual speed measured by a speed sensor reaches the limit speed, a warning device is operated to give warning to a driver.

JP 2012 096742 A describes a steer-by-wire type steering device that includes: a turning angle detection sensor for detecting a turning angle of a handle; a steering angle sensor for detecting a steering angle of the steering wheel; a steering drive device for driving the steering wheel; and a control device for controlling the steering drive device. The steering wheel is driven in a steering direction according to the turning of the handle. The steering device further includes a deceleration means for decelerating a vehicle speed to a speed limit when the vehicle speed is higher than the speed limit set according to the turning angle. During deceleration turning by the deceleration means, the steering angle is increased to a predetermined angle according to the turning angle of the handle so that the constant centrifugal force acts on the vehicle.

CITATION LIST

PATENT LITERATURE

Patent Literature 1: JP H10-175800 A
Patent Literature 2: WO 2007/081020 A
Patent Literature 3: JP 2000-72396 A
Patent Literature 4: JP H03-295768 A

SUMMARY OF INVENTION

TECHNICAL PROBLEM

In the inventions described in Patent Literatures 1 to 3, since overturning is prevented by reducing the speed of the forklift, workability of the forklift is deteriorated. Further, in the inventions described in Patent Literatures 1 to 4, when abrupt steering is made and turning with an excessively small radius is done before the traveling speed decreases, overturning may occur before the traveling speed decreases.

The present invention has been made to solve the above problems, and an object of the present invention is to provide an industrial vehicle capable of reliably preventing overturning.

SOLUTION TO PROBLEM

The invention according to claim 1 is directed to a steer-by-wire type industrial vehicle including: a main body including steered wheels; a steering handle for operating the steered wheels; a lifting and lowering member configured to lift and lower a load; a steering angle sensor configured to detect an angle of the steering handle; a steered wheel angle sensor configured to detect an angle of the steered wheels; and a steered wheel angle control unit configured to change the angle of the steered wheels so that the angle of the steering handle detected by the steering angle sensor corresponds to the angle of the steered wheels detected by the steered wheel angle sensor, the industrial vehicle including: a speed sensor configured to detect a traveling speed of the vehicle; a weight sensor configured to detect a weight of the load; a position sensor configured to detect a height position of the load; and an angle calculation unit configured to calculate the angle of the steered wheels corresponding to a minimum turning radius at which the vehicle does not turn over based on the traveling speed detected by the speed sensor, the weight of the load detected by the weight sensor, and the height position of the load detected by the position sensor; and a steered wheel angle limitation unit configured to limit the angle of the steered wheels based on the angle of the steered wheels corresponding to the minimum turning radius calculated by the angle calculation unit.

The invention according to claim 2 is directed to the industrial vehicle according to claim 1, which further includes a steering angle limitation unit configured to control the angle of the steering handle based on the angle of the steered wheels corresponding to the minimum turning radius calculated by the angle calculation unit.

The invention according to claim 3 is directed to the industrial vehicle according to claim 1, which further includes a warning notification unit configured to execute a warning notification based on the angle of the steered wheels corresponding to the minimum turning radius calculated by the angle calculation unit.

ADVANTAGEOUS EFFECTS OF INVENTION

According to the invention according to claim 1, since the angle of the steered wheels corresponding to the minimum turning radius at which the vehicle does not turn over is calculated based on the traveling speed detected by the speed sensor, the weight of the load detected by the weight sensor, and the height position of the load detected by the position sensor, and the angle of the steered wheels is limited based on the angle of the steered wheels, it is possible to reliably prevent the overturning of the vehicle.

According to the invention according to claim 2, the angle of the steering handle is limited in association with the angle of the steered wheel a movable angle range of the steering angle and a movable angle range of the steering handle can be matched, and it is possible to prevent an erroneous operation by an operator.

According to the invention according to claim 3, since the warning notification is executed based on the angle of the steered wheels corresponding to the minimum turning radius, it is possible to prevent an erroneous operation by the operator by the warning.

BRIEF DESCRIPTION OF DRAWINGS

Fig. 1 is a schematic side view of a forklift according to the present invention.
Fig. 2 is a front schematic diagram of the forklift according to the present invention.
Fig. 3 is a block diagram illustrating a main drive system of the forklift according to the present invention.
Fig. 4 is a block diagram illustrating a main control system of the forklift according to the present invention.
Fig. 5 is a block diagram illustrating a functional configuration of a control unit 30.
Fig. 6 is a schematic diagram schematically illustrating a traveling speed $V(t)$ and a turning radius $r(\theta2(t))$ of the forklift.

DESCRIPTION OF EMBODIMENTS

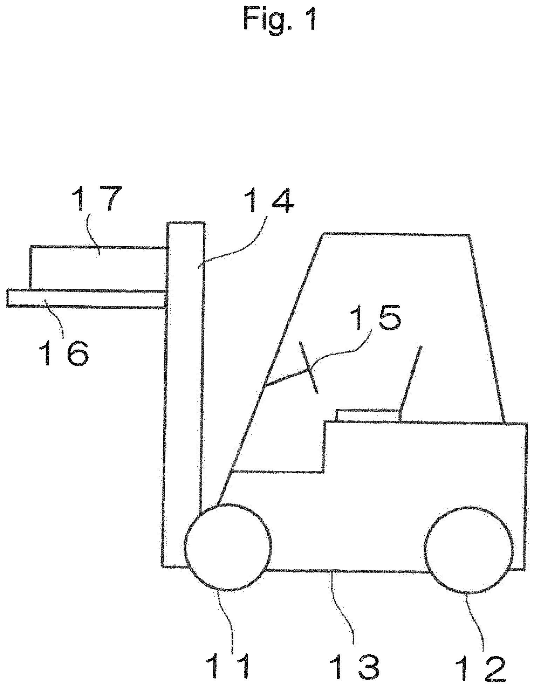

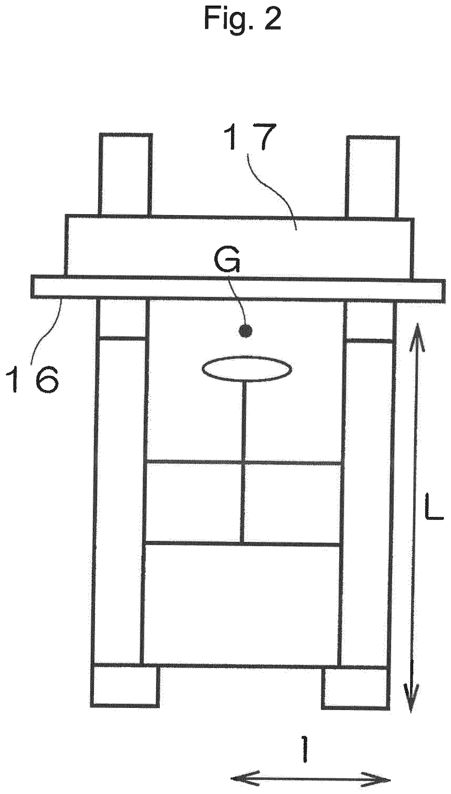

Hereinafter, embodiments of the present invention will be described with reference to the drawings. Fig. 1 is a schematic side view of a forklift as an industrial vehicle according to the present invention, and Fig. 2 is a schematic front view of the forklift.

The forklift includes a steer-by-wire type steering system, and includes a main body 13 including front wheels 11 as traveling wheels and rear wheels 12 as steered wheels, a steering handle 15 for operating the rear wheels 12, and a fork 16 as a lifting and lowering member configured to lift and lower with respect to a lifting and lowering mechanism 14 disposed on the main body 13 in a state of supporting a load 17.

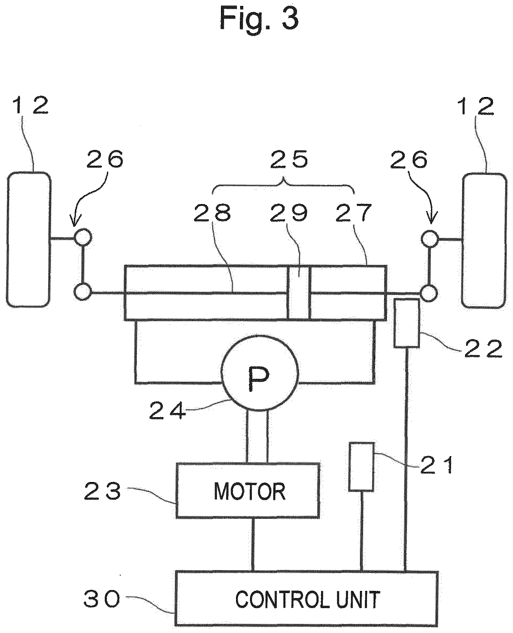

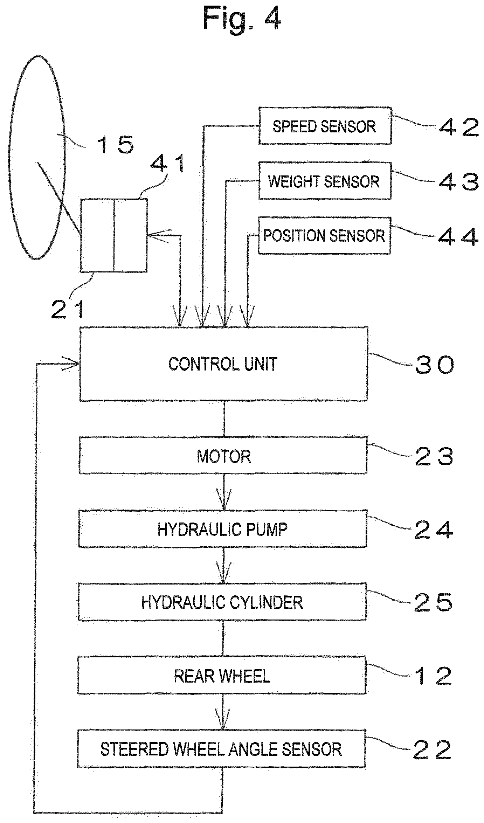

Fig. 3 is a block diagram illustrating a main drive system of the forklift according to the present invention. Fig. 4 is a block diagram illustrating a main control system of the forklift according to the present invention.

The forklift includes a hydraulic cylinder 25 including a cylinder 27 for changing a steering angle of a pair of the rear wheels 12 as the steered wheels via a knuckle arm 26, a cylinder rod 28, and a piston 29. The forklift also includes a hydraulic pump 24 for supplying hydraulic oil to the hydraulic cylinder 25, a motor 23 configured to rotate the hydraulic pump 24 in forward and reverse directions to actuate the hydraulic cylinder 25, a steering angle sensor 21 for detecting the angle of the steering handle 15, a steered wheel angle sensor 22 for detecting the steering angle of the rear wheels 12, and a brake mechanism 41 configured to regulate rotation of the steering handle 15. The forklift further includes a control unit 30 including a steered wheel angle control unit 31, which will be described later, for changing the steering angle of the rear wheels 12 so that the angle of the steering handle 15 corresponds to an angle of the rear wheels 12, based on signals from the steering angle sensor 21 and the steered wheel angle sensor 22. The control unit 30 is connected to a speed sensor 42 configured to detect a traveling speed of the vehicle (forklift), a weight sensor 43 configured to detect a weight of the load 17, and a position sensor 44 configured to detect a height position of the load 17.

In this forklift, when the steering handle 15 is operated to change its angle, the steering angle sensor 21 detects this change, and transmits a signal indicating the angle of the steering handle 15 to the control unit 30. The control unit 30 rotates the motor 23 based on the signal indicating the angle of the steering handle 15 transmitted from the steering angle sensor 21, actuates the hydraulic cylinder 25 by driving the hydraulic pump 24, and changes the steering angle of the rear wheels 12. The steering angle of the rear wheels 12 is detected by the steered wheel angle sensor 22, and a signal indicating the steering angle is transmitted to the control unit 30. The steered wheel angle control unit 31 in the control unit 30 changes the steering angle of the rear wheels 12 so that the angle of the steering handle 15 corresponds to the angle of the rear wheels 12, based on the signals from the steering angle sensor 21 and the steered wheel angle sensor 22.

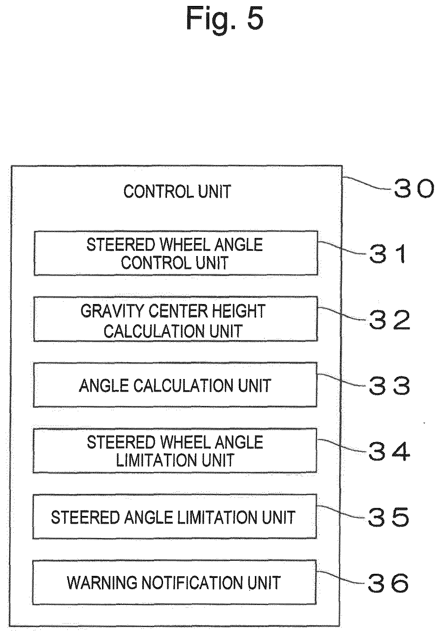

Fig. 5 is a block diagram illustrating a functional configuration of the control unit 30.

The control unit 30 is composed of a computer in which software is installed. The functions of the respective units included in the control unit 30 are achieved by executing the software installed in the computer.

The control unit 30 includes: the steered wheel angle control unit 31, as described above, for changing the steering angle of the rear wheels 12 so that the angle of the steering handle 15 corresponds to the angle of the rear wheels 12, based on the signals from the steering angle sensor 21 and the steered wheel angle sensor 22; a gravity center height calculation unit 32 configured to calculate a gravity center height L of the forklift and the load 17 combined based on a weight M of the load 17 detected by the weight sensor 43 and the height position of the load 17 detected by the position sensor 44; an angle calculation unit 33 configured to calculate an angle $\theta2(t)$ of the rear wheels 12 corresponding to a minimum turning radius $r(\theta2(t))$ at which a vehicle does not turn over based on a gravity center height L calculated by the gravity center height calculation unit 32 and a traveling speed $V(t)$ of the vehicle detected by a speed sensor 42; a steered wheel angle limitation unit 34 configured to limit the angle of the rear wheels 12 based on the angle $\theta2(t)$ of the rear wheels 12 corresponding to the minimum turning radius $r(\theta2(t))$ calculated by the angle calculation unit 33; a steering angle limitation unit 35 configured to control an angle $\theta1(t)$ of the steering handle 15 based on the angle $\theta2(t)$ of the rear wheels 12 corresponding to the minimum turning radius $r(\theta2(t))$ calculated by the angle calculation unit 33; and a warning notification unit 36 configured to execute a warning notification based on the angle $\theta2(t)$ of the rear wheels 12 corresponding to the minimum turning radius $r(\theta2(t))$ calculated by the angle calculation unit 33. Here, t is time.

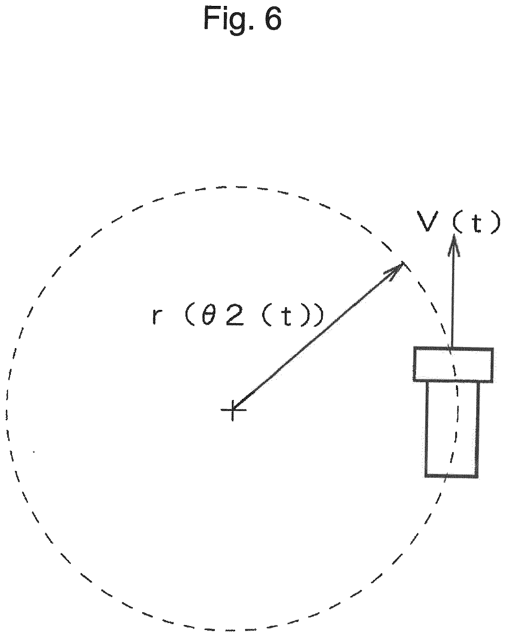

Next, a description will be given of a steered wheel angle limiting operation for limiting the angle of the rear wheels 12 as the steered wheels, in the forklift having the above configuration. Fig. 6 is a schematic diagram schematically illustrating the traveling speed $V(t)$ and the turning radius $r(\theta2(t))$ of the forklift.

A lateral load $F(t)$ to be applied to the forklift during turning is expressed by the following Equation (1), where M is the weight of the load 17, m is a weight of the forklift, $v(t)$ is the traveling speed of the vehicle, $r(\theta2(t))$ is the turning radius, $\theta2(t)$ is the angle of the rear wheels 12 as the steered wheels, and t is time.

$$F(t) = (M + m) \times v(t)^2/r(\theta2(t)) \cdots (1)$$

In addition, as illustrated in Fig. 2, where L is a height of a gravity center G of the forklift and the load 17 combined, l is a lateral position of the gravity center G (distance from the gravity center G to an overturning center of the forklift), and g is gravitational acceleration, a relationship of a moment acting on the forklift is expressed by the following Equation (2). Here, the height position of the gravity center G is calculated by the gravity center height calculation unit 32 on the basis of the height position of the load 17 detected by the position sensor 44, the weight of the load 17 detected by the weight sensor 43, the weight of the forklift itself, and the height position of the gravity center G. In addition, the position of the gravity center G in the lateral direction of the forklift is assumed to be a center of the forklift on the assumption that the load 17 is arranged in a central portion of the lateral direction.

$$F(t) \times L = (M + m) \times g \times l \cdots (2)$$

When Equation (1) is substituted into Equation (2), the following Equation (3) is obtained.

$$v(t)^2/r(\theta2(t)) \times L = g \times l \cdots (3)$$

Therefore, a condition under which the forklift does not turn over can be expressed by the following Equation (4).

$$v(t)^2/r(\theta2(t)) \times L < g \times l \cdots (4)$$

During traveling of the forklift, the angle $\theta2(t)$ of the rear wheels 12 corresponding to the minimum turning radius $r(\theta2(t))$ at which the vehicle does not turn over is calculated by the angle calculation unit 33 in the control unit 30 at the time t. The steered wheel angle limitation unit 34 limits the angle of the rear wheels 12 at each time based on the angle $\theta2(t)$ of the rear wheels 12 calculated by the angle calculation unit 33. This makes it possible to prevent the overturning of the forklift in advance.

At this time, in the forklift including the steer-by-wire type steering system, when the above configuration is adopted, a state occurs in which the angle of the rear wheels 12 is not changed even if the operator operates the steering handle 15, and a collision accident or the like may occur due to the operation of the rear wheels 12 against the operator's intention.

Therefore, in the forklift, the steering angle limitation unit 35 in the control unit 30 controls the angle $\theta1(t)$ of the steering handle 15 based on the angle $\theta2(t)$ of the rear wheels 12 corresponding to the minimum turning radius calculated by the angle calculation unit 33. More specifically, a range of the angle $\theta1(t)$ of the steering handle 15 is regulated in association with the angle $\theta2(t)$ of the rear wheels 12 by the brake mechanism 41 that regulates the rotation of the steering handle 15. In the steer-by-wire type steering system, the brake mechanism 41 is usually disposed to allow the operator to recognize that the hydraulic cylinder 25 for the steering handle 15 is at a stroke end or that the rear wheel 12 is in contact with an obstacle and the steering handle 15 cannot be turned. In the forklift according to the present invention, the brake mechanism 41 is used to regulate the range of the angle $\theta1(t)$ of the steering handle 15 in association with the angle $\theta2(t)$ of the rear wheels 12.

The warning notification unit 36 in the control unit 30 executes the warning notification based on the angle $\theta2(t)$ of the rear wheels 12 corresponding to the minimum turning radius calculated by the angle calculation unit 33. The warning notification may be a warning by sound or light in addition to display of a warning on a display unit.

With these configurations, the operator can recognize that the change of the angle of the rear wheels 12 is limited, and it is possible to prevent an erroneous operation by the operator.

In the embodiments described above, the present invention is applied to the forklift on which the load 17 is placed and moved by the fork 16 as the industrial vehicle according to the present invention. However, the present invention may be applied, for example, to an industrial vehicle, such as a high-place work vehicle, for executing work at a high place with a worker as a load.

REFERENCE SIGNS LIST

| 11 | Front Wheel |
|----|----|
| 12 | Rear Wheel |
| 13 | Main Body |
| 14 | Lifting And Lowering Mechanism |
| 15 | Steering Handle |
| 16 | Fork |
| 17 | Load |
| 21 | Steering Angle Sensor |
| 22 | Steered Wheel Angle Sensor |
| 23 | Motor |
| 24 | Hydraulic Pump |
| 25 | Hydraulic Cylinder |
| 30 | Control Unit |
| 31 | Steered Wheel Angle Control Unit |
| 32 | Gravity Center Height Calculation Unit |
| 33 | Angle Calculation Unit |
| 34 | Steered Wheel Angle Limitation Unit |
| 35 | Steering Angle Limitation Unit |
| 36 | Warning Notification Unit |
| 41 | Brake Mechanism |
| 42 | Speed Sensor |
| 43 | Weight Sensor |
| 44 | Position Sensor |
| G | Gravity Center |

**Claims**

1. A steer-by-wire type industrial vehicle comprising:

    a main body (13) including steered wheels (12);
    a steering handle (15) for operating the steered wheels (12);
    a lifting and lowering member (16) configured to lift and lower a load (17);
    a steering angle sensor (21) configured to detect an angle of the steering handle (15);
    a steered wheel angle sensor (22) configured to detect an angle ($\theta2(t)$) of the steered wheels (12); and
    a steered wheel angle control unit (31) configured to change the angle ($\theta2(t)$) of the steered wheels (12) so that the angle of the steering handle (15) detected by the steering angle sensor (21) corresponds to the angle ($\theta2(t)$) of the steered wheels (12) detected by the steered wheel angle sensor (22),
    the industrial vehicle comprising:

    a speed sensor (42) configured to detect a traveling speed of the vehicle;
    a weight sensor (43) configured to detect a weight (M) of the load (17);
    a position sensor (44) configured to detect a height of the load (17);
    an angle calculation unit (33) configured to calculate the angle ($\theta2(t)$) of the steered wheels (12) corresponding to a minimum turning radius ($r(\theta2(t))$) at which the vehicle does not turn over based on the traveling speed detected by the speed sensor (42), the weight (M) of the load (17) detected by the weight sensor (43), and the height of the load (17) detected by the position sensor (44); and
    a steered wheel angle limitation unit (34) configured to limit the angle ($\theta2(t)$) of the steered wheels (12) based on the angle ($\theta2(t)$) of the steered wheels (12) corresponding to the minimum turning radius ($r(\theta2(t))$) calculated by the angle calculation unit (33).

2. The industrial vehicle according to claim 1, further comprising a steering angle limitation unit (35) configured to control the angle of the steering handle (15) based on the angle ($\theta2(t)$) of the steered wheels (12) corresponding to the minimum turning radius ($r(\theta2(t))$) calculated by the angle calculation unit (33).

3. The industrial vehicle according to claim 1, further comprising a warning notification unit (36) configured to execute a warning notification based on the angle ($\theta2(t)$) of the steered wheels (12) corresponding to the minimum turning radius ($r(\theta2(t))$) calculated by the angle calculation unit (33).

4. The industrial vehicle according to claim 1, further comprising

    a gravity center height calculation unit (32) configured to calculate a gravity center height (L) of the industrial vehicle and the load (17) combined based on the weight (M) of the load (17) detected by the weight sensor (43) and the height of the load (17) detected by the position sensor (44), wherein the angle calculation unit (33) is configured to calculate the angle ($\theta2(t)$) of the steered wheels (12) corresponding to the minimum turning radius ($r(\theta2(t))$) at which the vehicle does not turn over based on the traveling speed detected by the speed sensor (42) and the gravity center height (L) calculated by the gravity center height calculation unit (32).

5. The industrial vehicle according to claim 1,

    wherein the angle calculation unit (33) is configured to calculate the angle ($\theta2(t)$) of the steered wheels (12) corresponding to the minimum turning radius $r(\theta2(t))$ at which the vehicle does not turn over based on the following equation

    $$v(t)^2/r(\theta2(t)) \times L = g \times l$$

    where v(t) is the traveling speed, L is the gravity center height of the industrial vehicle and the load (17) combined, l is a lateral position of a distance from the gravity center to an overturning center of the industrial vehicle, g is gravitational acceleration, and t is time.

**Patentansprüche**

1. Industrielles Fahrzeug vom Steer-by-Wire-Typ, aufweisend:

    einen Hauptkörper (13), der gelenkte Räder (12) aufweist;
    einen Lenkgriff (15) zum Bedienen der gelenkten Räder (12);
    ein Hebe- und Senkelement (16), das konfiguriert ist, um eine Last (17) anzuheben und abzusenken;
    einen Lenkwinkelsensor (21), der konfiguriert ist, um einen Winkel des Lenkgriffs (15) zu erfassen;
    einen Winkelsensor (22) für gelenkte Räder, der konfiguriert ist, um einen Winkel ($\theta2(t)$) der gelenkten Räder (12) zu erfassen; und

eine Winkelsteuereinheit (31) für gelenkte Räder, die konfiguriert ist, um den Winkel (θ2(t)) der gelenkten Räder (12) so zu ändern, dass der Winkel des Lenkgriffs (15), der von dem Lenkwinkelsensor (21) erfasst wird, dem Winkel (θ2(t)) der gelenkten Räder (12) entspricht, der von dem Winkelsensor (22) für gelenkte Räder erfasst wird,
wobei das industrielle Fahrzeug aufweist:

einen Geschwindigkeitssensor (42), der konfiguriert ist, um eine Fahrgeschwindigkeit des Fahrzeugs zu erfassen;
einen Gewichtssensor (43), der konfiguriert ist, um ein Gewicht (M) der Last (17) zu erfassen;
einen Positionssensor (44), der konfiguriert ist, um eine Höhe der Last (17) zu erfassen;
eine Winkelberechnungseinheit (33), die konfiguriert ist, um den Winkel (θ2(t)) der gelenkten Räder (12) entsprechend einem Mindestwenderadius (r(θ2(t))), bei welchem das Fahrzeug nicht umkippt, basierend auf der Fahrgeschwindigkeit, die von dem Geschwindigkeitssensor (42) erfasst wird, dem Gewicht (M) der Last (17), das von dem Gewichtssensor (43) erfasst wird, und der Höhe der Last (17), die von dem Positionssensor (44) erfasst wird, zu berechnen; und
eine Winkelbegrenzungseinheit (34) für gelenkte Räder, die konfiguriert ist, um den Winkel (θ2(t)) der gelenkten Räder (12) basierend auf dem Winkel (θ2(t)) der gelenkten Räder (12), der dem Mindestwenderadius (r(θ2(t))) entspricht, der von der Winkelberechnungseinheit (33) berechnet wird, zu begrenzen.

2. Industrielles Fahrzeug nach Anspruch 1, ferner aufweisend eine Lenkwinkelbegrenzungseinheit (35), die konfiguriert ist, um den Winkel des Lenkgriffs (15) basierend auf dem Winkel (θ2(t)) der gelenkten Räder (12), der dem Mindestwenderadius (r(θ2(t))) entspricht, der von der Winkelberechnungseinheit (33) berechnet wird, zu steuern.

3. Industrielles Fahrzeug nach Anspruch 1, ferner aufweisend eine Warnbenachrichtigungseinheit (36), die konfiguriert ist, um eine Warnbenachrichtigung basierend auf dem Winkel (θ2(t)) der gelenkten Räder (12), der dem Mindestwenderadius (r(θ2(t))) entspricht, der von der Winkelberechnungseinheit (33) berechnet wird, auszuführen.

4. Industrielles Fahrzeug nach Anspruch 1, ferner aufweisend

eine Schwerpunkthöhenberechnungseinheit (32), die konfiguriert ist, um eine Schwerpunkthöhe (L) des industriellen Fahrzeugs und der Last (17) kombiniert basierend auf dem Gewicht (M) der Last (17), das von dem Gewichtssensor (43) erfasst wird, und der Höhe der Last (17), die von dem Positionssensor (44) erfasst wird, zu berechnen,
wobei die Winkelberechnungseinheit (33) konfiguriert ist, um den Winkel (θ2(t)) der gelenkten Räder (12), der dem Mindestwenderadius (r(θ2(t))) entspricht, bei welchem das Fahrzeug nicht umkippt, basierend auf der Fahrgeschwindigkeit, die von dem Geschwindigkeitssensor (42) erfasst wird, und der Schwerpunkthöhe (L), die von der Schwerpunkthöhenberechnungseinheit (32) berechnet wird, zu berechnen.

5. Industrielles Fahrzeug nach Anspruch 1,

wobei die Winkelberechnungseinheit (33) konfiguriert ist, um den Winkel (θ2(t)) der gelenkten Räder (12), der dem Mindestwenderadius entspricht (r(θ2(t))), bei welchem das Fahrzeug nicht umkippt, basierend auf folgender Gleichung zu berechnen:

$$v(t)^2/r(\theta2(t)) \times L = g \times l$$

wobei v(t) die Fahrgeschwindigkeit ist, L die Schwerpunkthöhe des industriellen Fahrzeugs und der Last (17) kombiniert ist, l eine seitliche Position einer Distanz von dem Schwerpunkt zu einem Umkippmittelpunkt des industriellen Fahrzeugs ist, g die Gravitationsbeschleunigung ist und t die Zeit ist.

**Revendications**

1. Véhicule industriel du type à direction à commande électrique, le véhicule comprenant :

un corps principal (13) comportant des roues directrices (12) ;
une manette de direction (15) permettant d'actionner les roues directrices (12) ;
un élément de levage et de descente (16), conçu pour faire monter et descendre une charge (17) ;
un capteur (21) d'angle de braquage, conçu pour détecter un angle de la manette de direction (15) ;
un capteur (22) d'angle de roue directrice, conçu pour détecter un angle (θ2(t)) des roues directrices (12) ; et
une unité (31) de commande de l'angle des roues directrices, conçue pour modifier l'angle

($\theta2(t)$) des roues directrices (12), de sorte que l'angle de la manette de direction (15) détecté par le capteur (21) d'angle de braquage corresponde à l'angle ($\theta2(t)$) des roues directrices (12) détecté par le capteur (22) d'angle de roue directrice,

le véhicule industriel comprenant :

> un capteur de vitesse (42), conçu pour détecter une vitesse de déplacement du véhicule ;
> un capteur de poids (43), conçu pour détecter un poids (M) de la charge (17) ;
> un capteur de position (44), conçu pour détecter une hauteur de la charge (17) ;
> une unité (33) de calcul d'angle, conçue pour calculer l'angle ($\theta2(t)$) des roues directrices (12) correspondant à un rayon de virage minimal ($r(\theta2(t))$) auquel le véhicule ne se retourne pas, sur la base de la vitesse de déplacement détectée par le capteur de vitesse (42), du poids (M) de la charge (17) détecté par le capteur de poids (43) et de la hauteur de la charge (17) détectée par le capteur de position (44) ; et
> une unité (34) de limitation d'angle de roue directrice, conçue pour limiter l'angle ($\theta2(t)$) des roues directrices (12) sur la base de l'angle ($\theta2(t)$) des roues directrices (12) correspondant au rayon de virage minimal ($r(\theta2(t))$) calculé par l'unité (33) de calcul d'angle.

2. Le véhicule industriel selon la revendication 1, comprenant en outre une unité (35) de limitation d'angle de braquage, conçue pour commander l'angle de la manette de direction (15) sur la base de l'angle ($\theta2(t)$) des roues directrices (12) correspondant au rayon de virage minimal ($r(\theta2(t))$) calculé par l'unité (33) de calcul d'angle.

3. Le véhicule industriel selon la revendication 1, comprenant en outre une unité (36) de notification d'avertissement, conçue pour exécuter une notification d'avertissement sur la base de l'angle ($\theta2(t)$) des roues directrices (12) correspondant au rayon de virage minimal ($r(\theta2(t))$) calculé par l'unité (33) de calcul d'angle.

4. Le véhicule industriel selon la revendication 1, comprenant en outre

> une unité (32) de calcul de hauteur de centre de gravité, conçue pour calculer une hauteur (L) du centre de gravité du véhicule industriel et de la charge (17) combinés, sur la base du poids (M) de la charge (17) détecté par le capteur de poids (43) et de la hauteur de la charge (17) détectée par le capteur de position (44),
l'unité (33) de calcul d'angle étant conçue pour calculer l'angle ($\theta2(t)$) des roues directrices (12) correspondant au rayon de virage minimal ($r(\theta2(t))$) auquel le véhicule ne se retourne pas, sur la base de la vitesse de déplacement détectée par le capteur de vitesse (42) et de la hauteur (L) du centre de gravité calculée par l'unité (32) de calcul de hauteur de centre de gravité.

5. Le véhicule industriel selon la revendication 1,

> dans lequel l'unité (33) de calcul d'angle est conçue pour calculer l'angle ($\theta2(t)$) des roues directrices (12) correspondant au rayon de virage minimal $r((\theta2(t))$ auquel le véhicule ne se retourne pas, sur la base de l'équation suivante :

$$v(t)^2/r(\theta2(t)) \times L = g \times l$$

> dans laquelle v(t) est la vitesse de déplacement, L est la hauteur du centre de gravité du véhicule industriel et de la charge (17) combinés, l est une position latérale d'une distance allant du centre de gravité à un centre de retournement du véhicule industriel, g est l'accélération de la pesanteur et t est le temps.

Fig. 1

# Fig. 2

# Fig. 3

# Fig. 4

SPEED SENSOR — 42

WEIGHT SENSOR — 43

POSITION SENSOR — 44

15

41

21

CONTROL UNIT — 30

MOTOR — 23

HYDRAULIC PUMP — 24

HYDRAULIC CYLINDER — 25

REAR WHEEL — 12

STEERED WHEEL ANGLE SENSOR — 22

# Fig. 5

CONTROL UNIT ⟍30

| STEERED WHEEL ANGLE CONTROL UNIT | ⟍31 |

| GRAVITY CENTER HEIGHT CALCULATION UNIT | ⟍32 |

| ANGLE CALCULATION UNIT | ⟍33 |

| STEERED WHEEL ANGLE LIMITATION UNIT | ⟍34 |

| STEERED ANGLE LIMITATION UNIT | ⟍35 |

| WARNING NOTIFICATION UNIT | ⟍36 |

# Fig. 6

$r(\theta 2(t))$

$V(t)$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018229989 A1
- JP 2005200212 A
- JP 2012096742 A
- JP H10175800 A
- WO 2007081020 A
- JP 2000072396 A
- JP H03295768 A